# EUROPEAN PATENT APPLICATION

(11) **EP 3 002 948 A1**
(43) Date of publication of application: **06.04.2016**
(21) Application number: 15187826.1
(22) Date of filing: 01.10.2015
(51) Int. Cl.: H04N 19/46, H04N 19/593, H04N 19/186

(54) **DECODER, DECODING METHOD, AND CODEC SYSTEM**

(30) Priority: 01.10.2014 US 201462058111 P; 18.09.2015 TW 104130995
(71) Applicant: Industrial Technology Research Institute, Chutung Hsinchu 31040 (TW)
(72) Inventor: Chang, Yao-Jen, 300 Hsinchu City (TW); Lin, Chun-Lung, 643 Yunlin County (TW); Lin, Ching-Chieh, 105 Taipei City (TW); Tu, Jih-Sheng, 260 Yilan County (TW)
(74) Representative: Becker Kurig Straus

(57) **Abstract**

A method for decoding, a method for encoding, a codec system, a decoder and an encoder are provided. The method includes receiving a first flag corresponding to a coding unit block, and receiving and reading a second flag corresponding to the coding unit block and index values of each pixel of the coding unit block when a state value of the first flag is conformed with a predetermined state value. The method also includes selecting N colors corresponding to N index pixels from a neighboring area of the coding unit block according to the second flag, wherein the second flag indicates an amount of the N colors corresponding to the N index pixels and colors of each of the N colors are different. The method further includes reconstructing pixels of the coding unit block according to the N colors corresponding to the N index pixels.

## Description

### BACKGROUND OF THE DISCLOSURE

### Field of the Disclosure

The disclosure relates to an encoding method and a decoding method for encoding and decoding a coding unit block, and a codec system, an encoder and a decoder using the methods.

### Description of Related Art

Along with development of technology, resolution, specification and sizes of video displays become higher and higher, and people's demand on quality and size of video images is also enhanced. In order to satisfy such demand, a video coding experts group under the international telecommunications union-telecommunication (ITU-T) and a moving picture experts group (MPEG) under the international standards organization/international electrotechnical commission (ISO/IEC) co-found a joint collaborative team on video coding (JCT-VC), and start a high efficiency video coding (H.265/HEVC) project, and a target thereof is to provide a coding efficiency higher than that of an advanced video coding (H.264/AVC) video compression standard (about 50% bit rate is saved under a same subjective quality), especially for high resolution videos of high definition (HD), ultra high definition (ultra HD), etc.

An application environment of the large size and high resolution videos is mainly natural video images, and customisation thereof is completed in 2013, and the currently customized standard is a HEVC screen content coding (HEVC SCC) standard. A video content shared by the screen generally has a mixed video content material, for example, an image may simultaneously include a nature image, a large amount of text pictures, a mouse indicator and various lines, etc., and since the screen application environment is no longer conformed with a design target of the H.265/HEVC, the JCT-VC has transferred its focus to develop a new high-efficiency screen coding standard technique recently. Development of new coding tools of the HEVC SCC standard is implemented based on the existing structure of the H.265/HEVC, for example, the new coding tool explored by the JCT-VC includes a palette mode, an intra block copy (IBC) mode, etc.

However, image and video compression requires a large amount of computations, so that it is important to improve a coding efficiency of the image and video compression, so as to decrease unnecessary transmission and computations in the coding operation.

### SUMMARY OF THE DISCLOSURE

The disclosure is directed to a method for encoding and a method for decoding, and a system for encoding and decoding, an encoder and a decoder using the methods, by which a coding performance technique is effectively improved.

An exemplary embodiment of the disclosure provides a decoder including a storage circuit and a processor circuit. The storage circuit records a plurality of modules, and the processor circuit is connected to the storage circuit, and is configured to access the storage circuit and execute a neighboring block multi-color prediction mode through the modules. The modules include a receiving module, a flag state determination module, a color setting module and a decoding module. The receiving module receives a first flag corresponding to a coding unit block, and the flag state determination module determines a state value of the first flag corresponding to the coding unit block, and when the state value of the first flag is conformed with a predetermined state value, the receiving module further receives a second flag corresponding to the coding unit block and an index value corresponding to each pixel of the coding unit block. The color setting module reads the second flag corresponding to the coding unit block and the index value corresponding to each pixel of the coding unit block received by the receiving module when the state value of the first flag is conformed with the predetermined state value, and selects N colors corresponding to N pixels from a plurality of pixels in a neighboring area of the coding unit block according to the second flag, where the second flag indicates an amount of the N colors corresponding to the N pixels, and the N colors are all different, and N is a positive integer. The decoding module reconstructs pixels of the coding unit block according to the N colors corresponding to the N pixels.

An exemplary embodiment of the disclosure provides a decoding method for a coding unit block having a plurality of pixels, the decoding method includes receiving a first flag corresponding to the coding unit block; and receiving and reading a second flag corresponding to the coding unit block and an index value corresponding to each pixel of the coding unit block when a state value of the first flag is conformed with a predetermined state value. The method also includes selecting N colors corresponding to N pixels from a plurality of pixels in a neighboring area of the coding unit block according to the second flag, where the second flag indicates an amount of the N colors corresponding to the N pixels, where the N colors are all different, and N is a positive integer. The method further includes reconstructing the pixels of the coding unit block according to the N colors corresponding to the N pixels.

An exemplary embodiment of the disclosure provides a codec system including an encoder and a decoder. The encoder is configured to set a state value of a first flag corresponding to a coding unit block, and selects N colors corresponding to N pixels from a plurality of pixels in a neighboring area of the coding unit block when the state value of the first flag is conformed with a predetermined state value. Moreover, the encoder further sets a second flag corresponding to the coding unit block to an amount of the N colors corresponding to the N pixels, where the N colors are all different, and N is a positive integer. The encoder further indexes each pixel in the coding unit block such that a color of each pixel in the coding unit block is represented by index values of the N pixels, and the encoder further transmits the first flag corresponding to the coding unit block to the decoder, and when the state value of the first flag is conformed with the predetermined state value, the encoder transmits the second flag corresponding to the coding unit block and an index value corresponding to each pixel of the coding unit block to the decoder.

According to the above descriptions, in the coding method and the decoding method, and the codec system, the encoder and the decoder using the methods provided by the exemplary embodiments of the invention, the set flag is used for indicating the amount and colors of the pixels used for predicting and reconstructing the current coding unit block in the neighboring area, so as to effectively save the amount of transmitted bits in the coding operation, and accordingly improve the coding efficiency.

In order to make the aforementioned and other features and advantages of the disclosure comprehensible, several exemplary embodiments accompanied with figures are described in detail below.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1A illustrates an encoder according to an exemplary embodiment of the disclosure.
FIG. 1B illustrates a decoder according to an exemplary embodiment of the disclosure.
FIG. 1C illustrates a codec chip according to an exemplary embodiment of the disclosure.
FIG. 2 is a schematic diagram of a neighboring area of a coding unit block according to an exemplary embodiment of the disclosure.
FIG. 3A and FIG. 3B are schematic diagrams illustrating an example of selecting N colors corresponding to N pixels from a neighboring area according to an exemplary embodiment of the disclosure.
FIG. 4 is a schematic diagram illustrating an example of selecting N colors corresponding to N pixels from a neighboring area according to another exemplary embodiment of the disclosure.
FIG. 5 is a schematic diagram illustrating an example of selecting N colors corresponding to N pixels from the neighboring area according to still another exemplary embodiment of the disclosure.
FIG. 6 is an example of establishing an index map according to an exemplary embodiment of the disclosure.
FIG. 7 is a flowchart illustrating an encoding method according to an exemplary embodiment of the disclosure.
FIG. 8 is a flowchart illustrating a decoding method according to an exemplary embodiment of the disclosure.
FIG. 9A-FIG. 9C illustrate program codes for decoding according to an exemplary embodiment of the disclosure.
FIG. 10 is a schematic diagram illustrating a test result of coding/encoding according to an exemplary embodiment of the disclosure.

### DESCRIPTION OF EMBODIMENTS

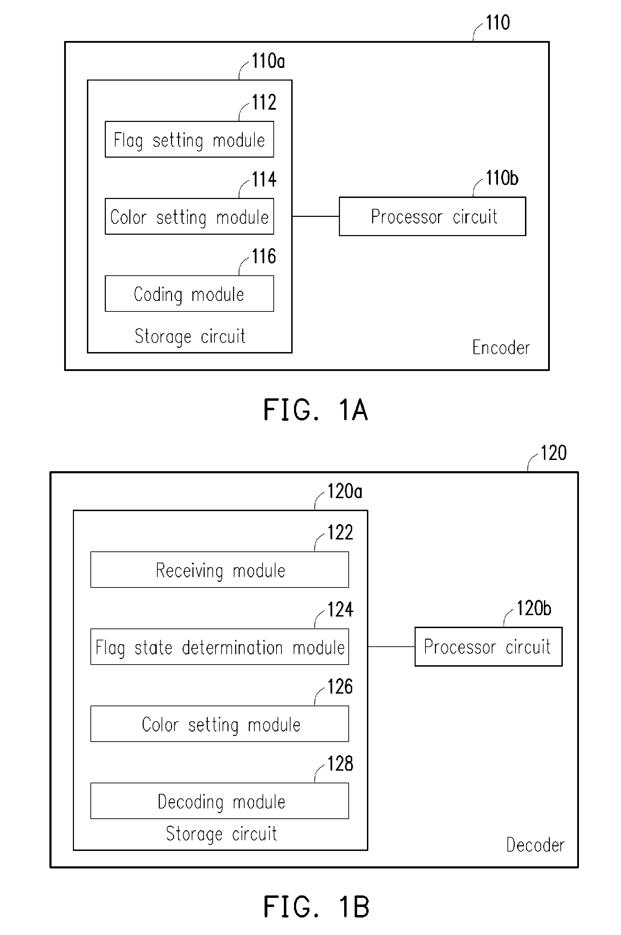

FIG. 1A illustrates an encoder according to an exemplary embodiment of the disclosure.

Referring to FIG. 1A, the encoder 110 includes a storage circuit 110a and a processor circuit 110b. The storage circuit 110a is configured to store various data, program codes, or images to be processed or processed images. For example, the storage circuit 110a can be a storage medium such as a memory or a hard disk driver (HDD), etc., though the disclosure is not limited thereto. The processor circuit 110b is configured to control a whole operation of the encoder 110. For example, the processor circuit 110b can be a central processing unit (CPU), a micro-processor or an embedded controller, which is not limited by the disclosure. In the present exemplary embodiment, the storage circuit 110a is further configured to record a plurality of modules, and the processor circuit 110b is connected to the storage circuit 110a and is configured to access the storage circuit 110a. The processor circuit 110b executes a neighboring block multi-color prediction mode of the disclosure through the modules. The modules include a flag setting module 112, a color setting module 114 and a coding module 116.

The flag setting module 112 sets a state value of a flag corresponding to a currently encoded coding unit block. To be specific, under the H.265/HEVC standard, one coding tree unit (CTU) is taken as a maximum processing block for coding a coding unit (CU), and a size of the CTU can be set as a block of 64×64. The coding unit block can be smaller than or equal to the block size of the CTU. For example, the coding unit block is a square rectangle and a size thereof can be a block of 64×64, 32×32, 16×16, 8×8, or 4×4. Moreover, the coding unit block in the exemplary embodiment of the disclosure has a plurality of pixels, and a unit of the size of the coding unit block is pixel.

The flag setting module 112 sets a flag (which is also referred to as a first flag) corresponding to the coding unit block to indicate whether to enable the neighboring block multi-color prediction mode. The neighboring block multi-color prediction mode of the disclosure is to use one or a plurality of colors of pixels in a neighboring area of the currently encoded coding unit block to predict the pixels of the currently encoded coding unit block. For example, when the neighboring block multi-color prediction mode is to be enabled, the flag setting module 112 sets the state value of the first flag corresponding to the coding unit block to a predetermined state value. Conversely, when the neighboring block multi-color prediction mode is not to be enabled, the flag setting module 112 may set the state value of the first flag corresponding to the coding unit block to other state value.

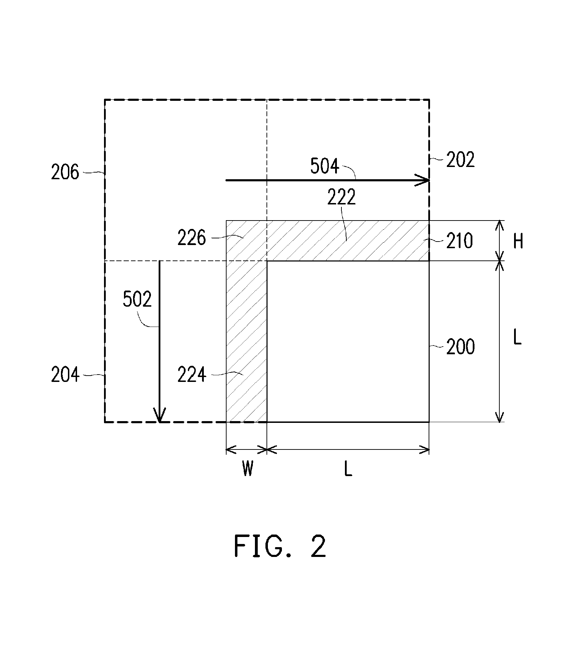

The color setting module 114 determines whether the state value of the first flag is conformed with the predetermined state value, and selects N colors corresponding to N pixels from a plurality of pixels in the neighboring area of the coding unit block when the state value of the first flag is conformed with the predetermined state value. The N colors selected by the color setting module 114 are all different. In other words, when the color setting module 114 determines that the state value of the first flag is conformed with the predetermined state value, the encoder 110 enters the neighboring block multi-color prediction mode to use one or a plurality of colors of the pixels in the neighboring area of the currently encoded coding unit block to predict the pixels of the currently encoded coding unit block. Then, the flag setting module 112 sets another flag (which is also referred to as a second flag) corresponding to the coding unit block to an amount of the selected N colors corresponding to the N pixels. The method that the color setting module 114 selects the N colors corresponding to the N pixels from the neighboring area 210 is described in detail later with reference of FIG. 2, FIG. 3A, FIG. 3B, FIG. 4 and FIG. 5.

It should be noted that one color referred in the disclosure is not limited to a color consisting of a single composition element, but can also be a color consisting of a plurality of composition elements, for example, colors corresponding to a YUV format or a RGB format and consisting of three composition elements. The YUV format is used for compiling a color space, where "Y" represents luminance (Luma), "U" and "V" respectively represent chrominance and chroma, and Y, Cb, Cr are used for describing other composition elements. The RGB format is a color additive model, and color lights of three primary colors (red, green and blue) are added in different proportions to produce a variety of color lights, where R, G and B are used for describing the composition elements.

Then, the coding module 116 is configured to index each pixel in the coding unit block such that a color of each pixel in the coding unit block is represented by index values of the N pixels. Then, the coding module 116 transmits the first flag corresponding to the coding unit block to a decoding end, and when the state value of the first flag is conformed with the predetermined state value, the coding module 116 transmits the second flag corresponding to the coding unit block and an index value corresponding to each pixel of the coding unit block to the decoding end.

In the present exemplary embodiment, after the encoder 110 completes the aforementioned coding operation, the encoder 110 transmits the encoded data to a decoder to perform a decoding operation. For example, the encoder 110 is implemented in an image transmitting terminal, and the decoder is implemented in an image receiving terminal, where the encoder and the decoder may communicate with each other through a wired or wireless manner.

FIG. 1B illustrates a decoder according to an exemplary embodiment of the disclosure.

Referring to FIG. 1B, the decoder 120 includes a storage circuit 120a and a processor circuit 120b. Similarly, the storage circuit 120a is configured to store various data, program codes, or images to be processed or processed images. For example, the storage circuit 120a can be a storage medium such as a memory or a HDD, etc., though the disclosure is not limited thereto. The processor circuit 120b is configured to control a whole operation of the decoder 120. The processor circuit 120b is, for example, a CPU, a micro-processor or an embedded controller, which is not limited by the disclosure. In the present exemplary embodiment, the storage circuit 120a is further configured to record a plurality of modules, and the processor circuit 120b is connected to the storage circuit 120a and is configured to access the storage circuit 120a. The processor circuit 120b executes the neighboring block multi-color prediction mode through the modules. The modules include a receiving module 122, a flag state determination module 124, a color setting module 126 and a decoding module 128.

The receiving module 122 of the decoder 120 receives a first flag corresponding to the coding unit block, the second flag corresponding to the coding unit block and the index value corresponding to each pixel of the coding unit block from the encoder 110, and the decoder 120 reconstructs the corresponding coding unit block according to the received data. For example, the flag state determination module 124 determines whether the state value of the first flag corresponding to the coding unit block is conformed with the predetermined state value, and only when the state value of the first flag is conformed with the predetermined state value, the receiving module 122 further receives the second flag and the index value corresponding to each pixel of the coding unit block transmitted by the coding module 116. Then, the color setting module 126 reads the second flag corresponding to the coding unit block and the index value corresponding to each pixel of the coding unit block received by the receiving module 122. Since the second flag indicates the amount of the N colors corresponding to the aforementioned N pixels, the color setting module 126 may quickly select N colors from a plurality of pixels in the neighboring area of the coding unit block according to the second flag. In this way, the decoding module 128 may reconstruct the pixels of the coding unit block according to the N colors.

It should be noted that the aforementioned encoder and decoder are respectively implemented in different terminals, and transmit the required data to each other through a network. However, the disclosure is not limited thereto, and in another exemplary embodiment, the encoder and the decoder can also be implemented in a same chip or system.

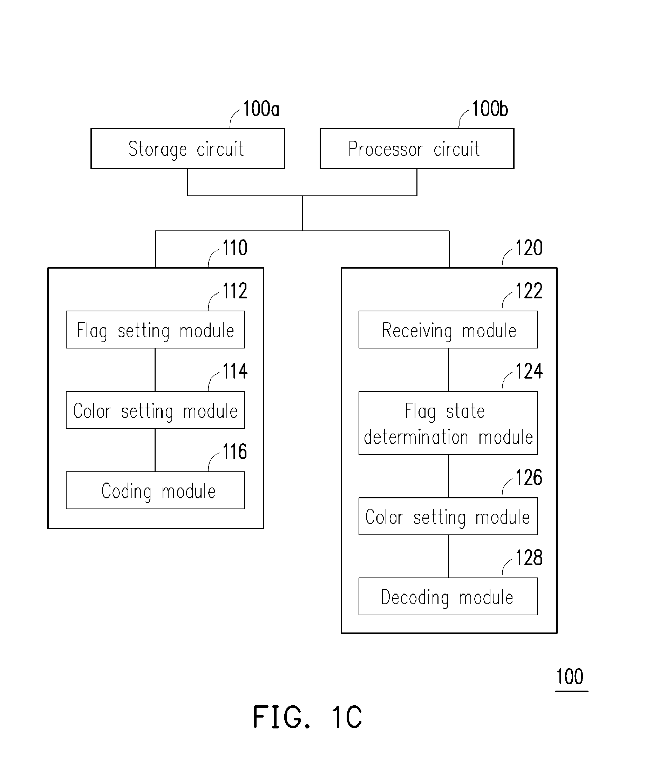

FIG. 1C illustrates a codec chip according to an exemplary embodiment of the disclosure.

Referring to FIG. 1C, the codec chip 100 (which is also referred to as a codec system 100) includes a storage circuit 100a, a processor circuit 110b, the encoder 110 and the decoder 120. The operations of the encoder 110 and the decoder 120 are respectively similar to that of the encoder and the decoder shown in FIG. 1A and FIG. 1B. For example, the encoder 110 includes the flag setting module 112, the color setting module 114 and the coding module 116. The decoder 120 includes the receiving module 122, the flag state determination module 124, the color setting module 126 and the decoding module 128.

Similarly, the storage the storage circuit 100a is configured to store various data, program codes, or images to be processed or processed images. For example, the storage circuit 100a can be a storage medium such as a memory or a HDD, etc., though the disclosure is not limited thereto. In the present exemplary embodiment, the storage circuit 100a is further configured to record a plurality of modules, and the modules include the flag setting module 112, the color setting module 114 and the coding module 116 of the encoder 110 and the receiving module 122, the flag state determination module 124, the color setting module 126 and the decoding module 128 of the decoder 120.

The processor circuit 100b is coupled to the storage circuit 100a, and is configured to control a whole operation of the codec chip 100. For example, the processor circuit 120b sends an instruction to the storage circuit 100a to execute a coding operation and a decoding operation to an image through the encoder 110 and the decoder 120. For example, the processor circuit 100b can be a CPU, a micro-processor or an embedded controller, which is not limited by the disclosure.

It should be noted that the encoder and the decoder of the disclosure are implemented by software modules or program codes. For example, the storage circuit 100a may store the flag setting module 112, the color setting module 114, the coding module 116, the receiving module 122, the flag state determination module 124, the color setting module 126 and the decoding module 128, and when the codec chip 100 is enabled, the software program codes are loaded to a buffer memory (not shown) from the storage circuit 100a and are executed by the processor circuit 100b to implement the functions of the modules. However, the disclosure is not limited thereto, for example, in another exemplary embodiment of the disclosure, the codec chip, the encoder and the decoder can be implemented by hardware circuits. For example, the flag setting module 112, the color setting module 114, the coding module 116, the receiving module 122, the flag state determination module 124, the color setting module 126 and the decoding module 128 can be implemented as a flag setting circuit, a color setting circuit, an encoding circuit, a receiving circuit, a flag state determination circuit and a decoding circuit through the hardware circuits.

In order to clearly describe the operations of the encoder 110, the decoder 120 and the codec chip 100, an exemplary embodiment is provided below for description with reference of the codec chip 100 of FIG. 1C.

FIG. 2 is a schematic diagram of a neighboring area of a coding unit block according to an exemplary embodiment of the disclosure.

Referring to FIG. 2, it is assumed that the currently encoded block is a coding unit block 200, and a size of the coding unit block 200 is L×L, where L is a positive integer. In the present embodiment, the color setting module 114 selects N pixels with different colors from a plurality of pixels in the neighboring area of the coding unit block 200, and sets the N colors corresponding to the N pixels as a basis for predicting the pixels of the coding unit block 200. However, the disclosure is not limited thereto, for example, in another exemplary embodiment, the color setting module 114 may also select the N colors corresponding to the N pixels from all of the pixels in the image. In the present exemplary embodiment, the neighboring area includes at least one other coding unit block neighboring to the coding unit block 200, and the at least one other coding unit block includes a coding unit block 202 neighboring to an upper edge of the coding unit block 200, a coding unit block 204 neighboring to a left edge of the coding unit block 200 and a coding unit block 206 neighboring to an upper left corner of the coding unit block 200. It should be noted that in a decoding sequence of the image where the coding unit block 200 and the at least one other coding unit block are located, the at least one other coding unit block has been decoded before the coding unit block 200 is decoded. In other words, the neighboring area does not include the currently encoded coding unit block and/or the region decoded after the currently encoded coding unit block in the decoding process. However, a region of the neighboring area is not limited by the disclosure, for example, in another exemplary embodiment, the neighboring area may also include a coding unit block to be encoded and/or an undecoded region in the image.

For example, in the present exemplary embodiment, the neighboring area may include a neighboring area 210 neighboring to the coding unit block 200 in the at least one other coding unit block neighboring to the coding unit block 200. In other words, a plurality of pixels in the neighboring area 210 can be pixels located to the upper left corner of the pixels at a first column and a first row of the coding unit block 200, and any pixel neighboring to the left edge of the coding unit block 200 in the neighboring area 210 and any pixel neighboring to the upper edge of the coding unit block 200 in the neighboring area 210. Namely, in an example that the coding unit block 200 is a 4×4 block, the neighboring area 210 is composed of a block 222 with a size of 1×4, a block 224 with a size of 4×1 and a block 226 with a size of 1×1, i.e., a length H of the block 222 of the neighboring area 210 is 1, and a width W of the block 224 of the neighboring area 210 is 1. However, the size of the neighboring area 210 is not limited by the disclosure. For example, in another exemplary embodiment, the length H of the block 222 and the width W of the block 224 in the neighboring area 210 of the coding unit block 200 with the size of 4×4 can be respectively 2.

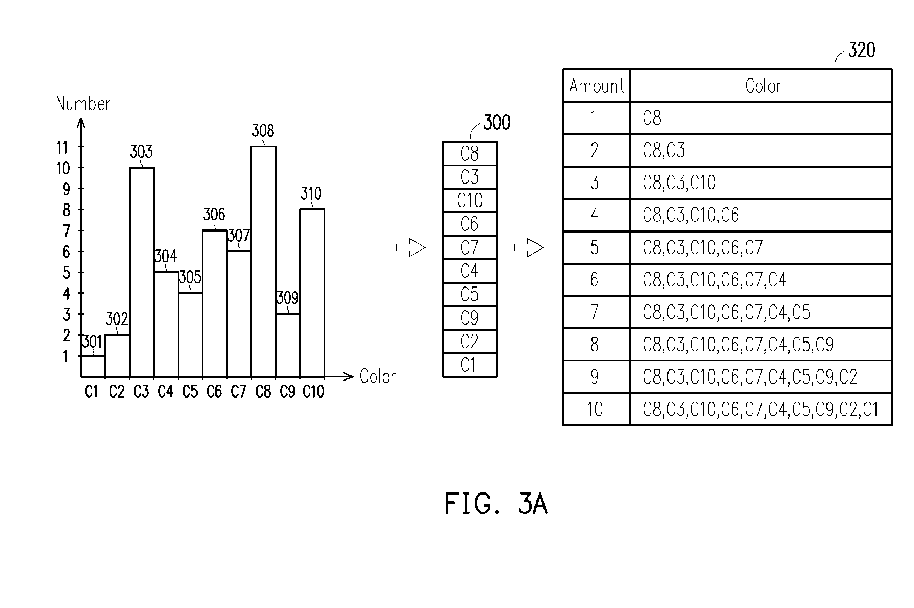

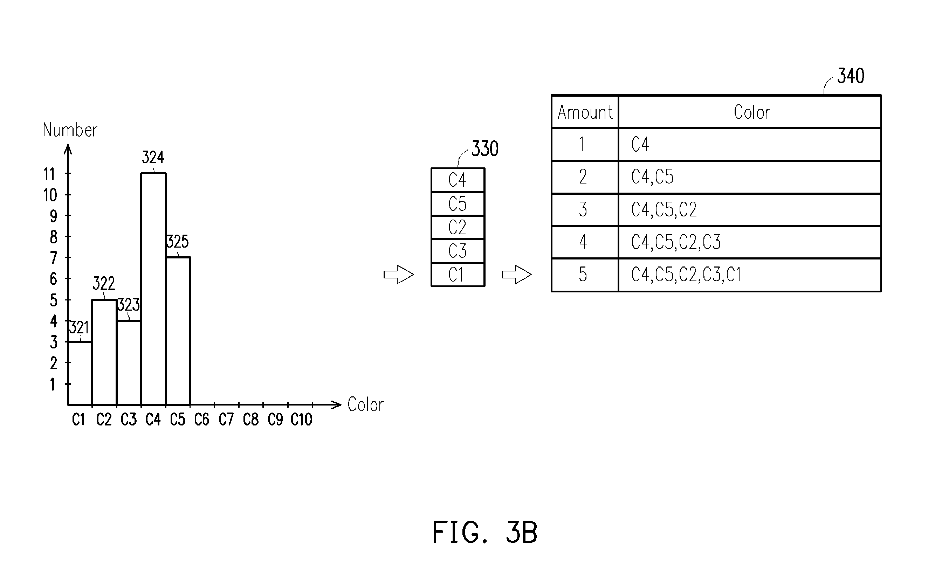

FIG. 3A and FIG. 3B are schematic diagrams illustrating an example of selecting N colors corresponding to N pixels from the neighboring area according to an exemplary embodiment of the disclosure.

Referring to FIG. 3A, in detail, when the flag setting module 112 sets the first flag corresponding to the coding unit block 200 to the predetermined state value, the encoder 110 enters the neighboring block multi-color prediction mode to use one or a plurality of colors of the pixels in the neighboring area of the currently encoded coding unit block to predict the pixels of the currently encoded coding unit block. For example, in the operation of selecting the N colors corresponding to the N pixels from a plurality of pixels in the neighboring area 210 of the coding unit block 200, it is assumed that when the color setting module 114 selects the one or a plurality of colors used for predicting the pixels of the coding unit block 200 from 10 sets of candidate colors, the color setting module 114 sets a predetermined candidate color amount to 10, and clusters the pixels in the neighboring area 210 into 10 clusters according to the predetermined candidate color amount. For example, the color setting module 114 may first cluster the pixels with the same color into a same cluster according to pixel values of the pixels. For example, the color of one pixel belonging to a cluster 301 is C1; 2 pixels belonging to a cluster 302 have a same pixel value, and the color of the two pixels is C2; 10 pixels belonging to a cluster 303 have a same pixel value, and the color of the 10 pixels is C3; 5 pixels belonging to a cluster 304 have a same pixel value, and the color of the 5 pixels is C4; 4 pixels belonging to a cluster 305 have a same pixel value, and the color of the 4 pixels is C5; 7 pixels belonging to a cluster 306 have a same pixel value, and the color of the 7 pixels is C6; 6 pixels belonging to a cluster 307 have a same pixel value, and the color of the 6 pixels is C7; 11 pixels belonging to a cluster 308 have a same pixel value, and the color of the 11 pixels is C8; 3 pixels belonging to a cluster 309 have a same pixel value, and the color of the 3 pixels is C9; and 8 pixels belonging to a cluster 310 have a same pixel value, and the color of the 8 pixels is C10. However, the pixel clustering method is not limited by the disclosure, for example, in another exemplary embodiment, the color setting module 114 clusters the pixels with similar pixel values into a same cluster. Then, the color setting module 114 arranges the 10 clusters in a descending order according to the amount of the pixels in each of the 10 clusters to obtain a sorting order 300 of 10 colors corresponding to the 10 clusters.

Then, the color setting module 114 obtains a candidate color mapping table 320 according to the sorting order 300, where the candidate color mapping table 320 records the color situations corresponding to different number selections, for example, when 3 colors corresponding to the pixels in the neighbouring area 210 are used for predicting the pixels of the coding unit block 200, since the colors corresponding to the number "3" are the color C8, the color C3 and the color C10, the color C8, the color C3 and the color C10 are used for predicting the pixels of the coding unit block 200. Particularly, in the coding operation, the color setting module 114 may respectively calculate distortion values between the pixels corresponding to the colors and the coding unit block 200 and bit numbers required for encoding the pixels corresponding to the colors and the coding unit block 200 in case that the colors corresponding to different numbers are selected. For example, the color setting module 114 calculates cost values respectively between the pixels corresponding to the colors and the coding unit block 200 according to the aforementioned distortion values and the bit numbers in case that the colors corresponding to different numbers are selected. Moreover, the color setting module 114 selects the pixels with the minimum cost value and the corresponding colors thereof to predict the pixels of the coding unit block 200 according to the cost values. In this way, the color setting module 114 may select an optimal set of colors to serve as the colors for predicting the pixels of the coding unit block 200. In other words, in the present exemplary embodiment, the color setting module 114 respectively performs a cost value operation to the 10 sets of colors in the candidate color mapping table 320 to obtain the optimal set of colors. However, the disclosure is not limited thereto, for example, in another exemplary embodiment, the color setting module 114 may omit the cost value operation to directly select one set of colors from the candidate color mapping table 320.

Here, it is assumed that the amount of colors in one set of colors with the minimum cost value is "3", and the color setting module 114 selects the color C8, the color C3 and the color C10 to serve as the colors for predicting the pixels of the coding unit block 200 according to the candidate color mapping table 320. Namely, in the coding operation of selecting the N colors corresponding to the N pixels from the neighboring area, the color setting module 114 may select 3 clusters (i.e. the cluster 308, the cluster 303 and the cluster 310) from the 10 clusters according to the sorting order 300, and sets the 3 colors (i.e. the color C8, the color C3 and the color C10) corresponding to the 3 clusters as 3 colors for predicting the pixels of the coding unit block 200. Here, the pixels corresponding to the selected 3 colors respectively belong to the cluster 308, the cluster 303 and the cluster 310.

Referring to FIG. 3B, if the color setting module 114 obtains 5 clusters (i.e. a cluster 321, a cluster 322, a cluster 323, a cluster 324 and a cluster 325) after clustering the pixels with the same color into a same cluster according to the pixel values of the pixels in the neighboring area 210, since the 5 clusters only correspond to 5 colors, the amount of the obtained colors is smaller than the aforementioned predetermined candidate color amount (i.e. "10"). Particularly, in the present exemplary embodiment, the color setting module 114 arranges the 5 clusters in a descending order only according to the amount of the pixels in each of the 5 clusters to obtain a sorting order 330. Similarly, the color setting module 114 obtains a candidate color mapping table 340 according to the sorting order 330 to record the color situations corresponding to different number selections. Then, the color setting module 114 may respectively calculate the cost values between the pixels corresponding to the colors and the coding unit block 200 to obtain the pixels with the minimum cost value and the corresponding colors thereof to predict the pixels of the coding unit block 200 in case that the colors corresponding to different numbers are selected. It should be noted that in the disclosure, the predetermined candidate color amount represents the amount of color sets serving as the colors for predicting the pixels of the coding unit block 200 in the neighboring block multi-color prediction mode. However, the predetermined candidate color amount is not limited by the disclosure, for example, in another exemplary embodiment, the predetermined candidate color amount can be other amount smaller than 10 or greater than 10.

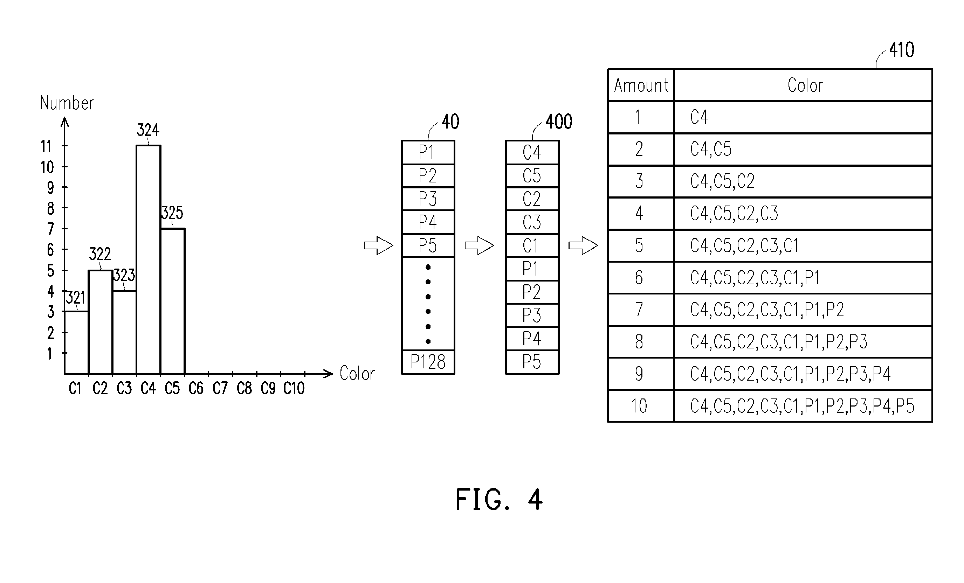

FIG. 4 is a schematic diagram illustrating an example of selecting N colors corresponding to N pixels from the neighboring area according to another exemplary embodiment of the disclosure.

Referring to FIG. 4, in the present exemplary embodiment, the coding operation of selecting N colors corresponding to N pixels from the neighboring area 210 is similar to the method shown in FIG. 3A and FIG. 3B, and a difference therebetween is that if the amount of M clusters obtained by the color setting module 114 after clustering the pixels with the same color into a same cluster according to the pixel values of the pixels in the neighboring area 210 is smaller than the aforementioned predetermined candidate color amount, the color setting module 114 selects P colors from a palette color prediction table 40 corresponding to the coding unit block 200 to serve as P cluster, such that (M+P) is equal to the predetermined candidate color amount. To be specific, in the example that the color setting module 114 clusters the pixels with the same color into the cluster 321, the cluster 322, the cluster 323, the cluster 324 and the cluster 325 according to the pixel values of the pixels in the neighboring area 210, since the amount of the 5 colors corresponding to the 5 clusters is smaller than the predetermined candidate color amount (for example, "10"), the color setting module 114 sequentially selects a color P1, a color P2, a color P3, a color P4 and a color P5 from the palette color prediction table 40 corresponding to the coding unit block 200. The colors in the palette color prediction table 40 are colors generated when the coding unit block is encoded by using a palette mode.

Then, the color setting module 114 arranges the colors C1-C5 respectively corresponding to the 5 clusters in a descending order according to the amount of the pixels in each of the 5 clusters, and arranges the color P1, the color P2, the color P3, the color P4 and the color P5 behind the colors C1-C5 to obtain a sorting order 400. Similarly, the color setting module 114 obtains a candidate color mapping table 410 according to the sorting order 400 to record the color situations corresponding to different number selections. Then, the color setting module 114 also calculates the cost values between the pixels corresponding to the colors and the coding unit block 200 to obtain the pixels with the minimum cost value and the corresponding colors thereof to predict the pixels of the coding unit block 200 in case that the colors corresponding to different numbers are selected. It should be noted that the colors used for filling the sorting order 400 to make the amount of the colors therein to be equal to the predetermined candidate color amount are not limited by the disclosure. For example, in another exemplary embodiment, a predetermined value is used to fill the sorting order 400, and the predetermined value is, for example, a color with the pixel value of 128 or 256.

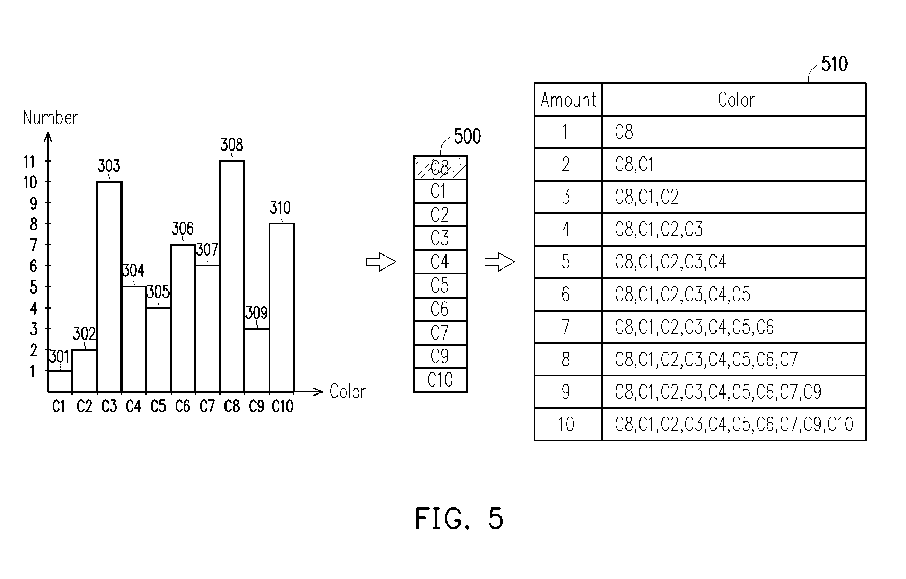

FIG. 5 is a schematic diagram illustrating an example of selecting N colors corresponding to N pixels from the neighboring area according to still another exemplary embodiment of the disclosure.

Referring to FIG. 5, in the present exemplary embodiment, the coding operation of selecting N colors corresponding to N pixels from the neighboring area 210 is similar to the method shown in FIG. 3A and FIG. 3B, and a difference therebetween is that after the color setting module 114 clusters the pixels with the same color into a same cluster to obtain M clusters according to the pixel values of the pixels in the neighboring area 210, the color setting module 114 selects one cluster from the M clusters according to the amount of the pixels in each cluster of the M clusters. Particularly, the amount of the pixels in such one cluster is greater than the amount of the pixels in other cluster of the M clusters. To be specific, when the color setting module 114 clusters the pixels with the same color into a same cluster to obtain 10 clusters according to the pixel values of the pixels in the neighboring area 210, the color setting module 114 only selects one cluster 308 with the maximum amount of pixels. Here, the other colors besides the color corresponding to the cluster 308 are also selected from the neighboring area 210, and a sorting order of the other colors besides the color corresponding to the cluster 308 is obtained according to a direction of sampling these colors from the neighboring area 210. For example, referring to FIG. 2, in an exemplary embodiment, the colors corresponding to the pixels obtained by the color setting module 114 by sampling the pixels in the neighboring area 210 along a first direction 502 are sequentially the color C1, the color C2, the color C3 and the color C4, and the colors corresponding to the pixels obtained by sampling the pixels in the neighboring area 210 along a second direction 504 are sequentially the color C5, the color C6, the color C7, the color C9 and the color C10. In this way, the color setting module 114 may fill the color C1, the color C2, the color C3, the color C4, the color C5, the color C6, the color C7, the color C9 and the color C10 to a sorting order 500 according to an obtaining sequence of these colors. However, the sampling direction of the color setting module 114 and a sampling sequence performed along the directions are not limited by the disclosure, for example, in another exemplary embodiment, the color setting module 114 may first sample along the second direction 504, and then samples along the first direction 502.

Then, the color setting module 114 obtains a candidate color mapping table 510 according to the sorting order 500 to record color situations corresponding to different number selections, and respectively calculates the cost values between the pixels corresponding to the colors and the coding unit block 200 to obtain the pixels with the minimum cost value and the corresponding colors thereof to predict the pixels of the coding unit block 200 in case that the colors corresponding to different numbers are selected.

After the color setting module 114 obtains one or a plurality of colors used for predicting the pixels of the coding unit block 200 according to one of a plurality of methods for selecting the N colors corresponding to the N pixels from the neighboring area 210 as shown in FIG. 2, FIG. 3A-FIG. 3B, FIG. 4 and FIG. 5, the color setting module 114 sets the second flag corresponding to the coding unit block 200 to the amount of the one or a plurality of colors. For example, taking FIG. 3A as an example, an optimal set of colors obtained by the color setting module 114 by respectively performing the cost value operation to the 10 sets of colors in the candidate color mapping table 320 includes the color C8, the color C3 and the color C10, so that the color setting module 114 may set the second flag corresponding to the coding unit block 200 to "3". Since the selected 3 colors are all different colors, and respectively correspond to 3 pixels, when the coding module 116 indexes each pixel in the coding unit block 200, the coding module 116 represents a color of each pixel in the coding unit block 200 by using the index values of the 3 pixels.

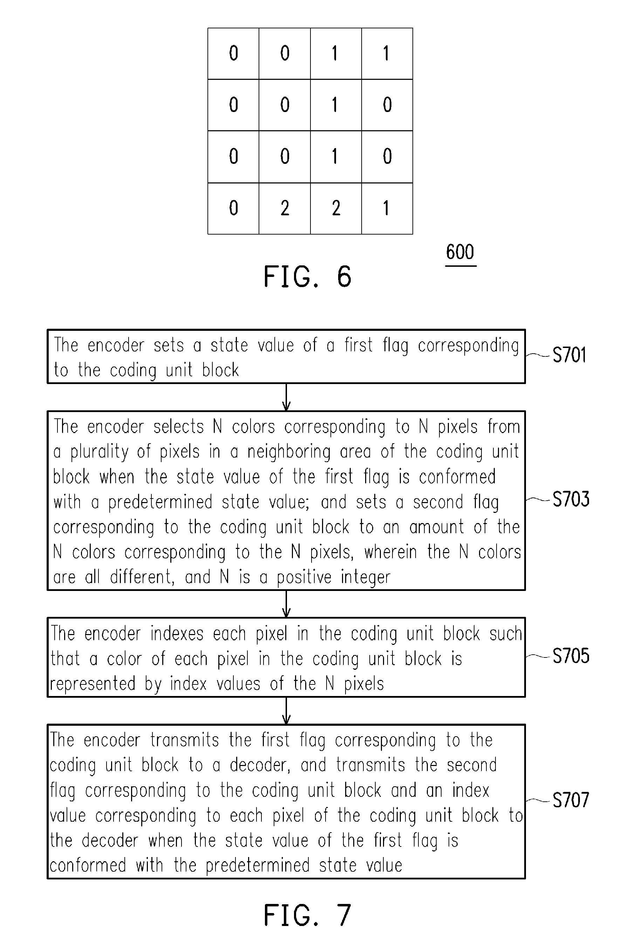

FIG. 6 is an example of establishing an index map according to an exemplary embodiment of the disclosure.

Referring to FIG. 6, when the coding module 116 is about to represent the color of each pixel in the coding unit block 200 by using the index values of the 3 pixels, i.e. when the second flag of the coding unit block 200 is set to "3", the coding module 116 may index each pixel in the coding unit block 200 according to the index values (i.e. 0, 1,2) corresponding to the 3 pixels to generate an index map 600. In other word, the color of each pixel of the coding unit block 200 in the index map 600 is presented by the index values (i.e. 0, 1, 2) corresponding to the 3 pixels. Particularly, in the present exemplary embodiment, it is assumed that the size of the coding unit block 200 is 4×4, the index values corresponding to each pixel of the coding unit block 200 in the index map 600 are arranged in a 4×4 matrix. Since the value of the set second flag is greater than 1, the coding module 116 may transmit the index values corresponding to each pixel of the coding unit block 200 to the decoder 120, and when the decoder 120 receives the first flag corresponding to the coding unit block 200, the second flag corresponding to the coding unit block 200 and the index values corresponding to each pixel of the coding unit block that are transmitted by the coding module 116, the decoding module 128 may reconstruct the index map 600 corresponding to the coding unit block 200 according to the index values (i.e. 0, 1,2) corresponding to each pixel of the coding unit block 200.

In another exemplary embodiment, taking FIG. 3A as an example, it is assumed that an optimal set of colors obtained by the color setting module 114 by respectively performing the cost value operation to the 10 sets of colors in the candidate color mapping table 320 includes the color C8, the color setting module 114 may set the second flag corresponding to the coding unit block 200 to "1". Since the selected one color corresponds to one pixel, when the coding module 116 indexes each pixel in the coding unit block 200, the coding module 116 represents a color of each pixel in the coding unit block 200 by using the index value (for example, 0) of the one pixel. Therefore, when the one set of colors selected by the color setting module 114 only includes one color, the coding module 116 is unnecessary to transmit the index value corresponding to the color of each pixel in the coding unit block 200 to the decoder 120, so as to decrease unnecessary transmission in the coding operation.

FIG. 7 is a flowchart illustrating an encoding method according to an exemplary embodiment of the disclosure.

Referring to FIG. 7, in step S701, the encoder 110 sets a state value of a first flag corresponding to the coding unit block 200.

In step S703, the encoder 110 selects N colors corresponding to N pixels from a plurality of pixels in the neighboring area 210 of the coding unit block 200 when determining that the state value of the first flag is conformed with a predetermined state value, and sets a second flag corresponding to the coding unit block 200 to an amount of the N colors corresponding to the N pixels, where the N colors are all different, and N is a positive integer.

In step S705, the encoder 110 indexes each pixel in the coding unit block 200 such that a color of each pixel in the coding unit block is represented by index values of the N pixels.

In step S707, the encoder 110 transmits the first flag corresponding to the coding unit block 200 to the decoder 120, and transmits the second flag corresponding to the coding unit block 200 and an index value corresponding to each pixel of the coding unit block 200 to the decoder 120 when the state value of the first flag is conformed with the predetermined state value.

Various steps of FIG. 7 have been described in detail above, and details thereof are not repeated. It should be noted that the steps of FIG. 7 can be implemented as a plurality of program codes or circuits, which is not limited by the disclosure. Moreover, the method of FIG. 7 can be used in collaboration with the aforementioned exemplary embodiments, and can be used independently, which is not limited by the disclosure. It should be noted that the encoding method of FIG. 7 can also be referred to as the neighboring block multi-color prediction mode, which is to use one or a plurality of colors of pixels in a neighboring area of the currently encoded coding unit block to predict the pixels of the currently encoded coding unit block. Particularly, in the aforementioned exemplary embodiment, the neighboring block multi-color prediction mode is other coding mode independent to the screen content coding (SCC). For example, the coding mode of the SCC includes a palette mode and an intra block copy mode, etc., and the encoder 110 may enter the coding mode corresponding to the flag according to the flags corresponding to different modes. In other words, when the encoder 110 receives a flag for enabling the palette mode, the encoder 110 executes the coding operation under the palette mode, and when the encoder 110 receives the first flag for enabling the neighboring block multi-color prediction mode (i.e. the first flag is conformed with the predetermined state value), the encoder 110 executes the coding operation under the neighboring block multi-color prediction mode. However, the disclosure is not limited thereto. For example, in another exemplary embodiment, the encoder 110 may execute the aforementioned neighboring block multi-color prediction mode under a specific coding mode of the SCC. Namely, the encoder 110 may determine whether to use the neighboring block multi-color prediction mode to execute the coding operation according to the state value of the first flag under the palette mode.

In the present exemplary embodiment, since the first flag is used for indicating whether to enable the neighboring block multi-color prediction mode, when the receiving module 122 of the decoder 120 receives the first flag corresponding to the coding unit block 200 from the coding module 116, the flag state determination module 124 determines the state value of the first flag corresponding to the coding unit block 200, and only when the flag state determination module 124 determines that the state value of the first flag is conformed with the predetermined state value, the receiving module 122 further receives the second flag and the index value corresponding to each pixel of the coding unit block 200 that are transmitted by the coding module 116. Then, since the state value of the first flag is conformed with the predetermined state value, the color setting module 126 may read the second flag corresponding to the coding unit block 200 and the index value corresponding to each pixel of the coding unit block 200 that are received by the receiving module 122, so as to execute the decoding operation of using the one or a plurality of colors of the pixels in the neighboring area of the currently encoded coding unit block to predict and reconstruct the pixels of the currently encoded coding unit block.

In the decoding operation, the decoder 120 may receive information from the encoder 110 to reconstruct the pixels of the coding unit block 200. For example, when the flag state determination module 124 determines that the first flag is conformed with the predetermined state value, the color setting module 126 selects N colors corresponding to N pixels from a plurality of pixels in the neighboring area 210 of the coding unit block 200 according to the received second flag to serve as the N colors used for reconstructing the pixels of the coding unit block 200. In the present exemplary embodiment, the method that the color setting module 126 selects N colors corresponding to N pixels from the neighboring area 210 to obtain the one or a plurality of colors used for reconstructing the pixels of the coding unit block 200 is similar to one of the methods shown in FIG. 2, FIG. 3A-FIG. 3B, FIG. 4 and FIG. 5, which is not repeated, and a difference therebetween is that the color setting module 126 of the decoder 120 quickly selects the N colors used for reconstructing the pixels of the coding unit block 200 according to the amount of the N colors corresponding to the N pixels that is indicated by the second flag without respectively calculating the cost values between the pixels corresponding to the colors and the coding unit block 200 in case that the colors corresponding to different numbers are selected.

Taking FIG. 3A and FIG. 6 as an example, the color setting module 126 clusters the pixels with the same color into a same cluster to obtain 10 clusters (i.e. the cluster 301, the cluster 302, the cluster 303, the cluster 304, the cluster 305, the cluster 306, the cluster 307, the cluster 308, the cluster 309 and the cluster 310) according to the pixel values of the pixels in the neighboring area 210, and arranges the 10 clusters in a descending order according to the amount of the pixels in each of the 10 clusters to obtain the sorting order 300. Particularly, in the example that the color setting module 114 of the encoder 110 sets the second flag corresponding to the coding unit block 200 to "3", the color setting module 126 of the decoder 120 directly and sequentially selects 3 colors (i.e. the color C8, the color C3 and the color C10) corresponding to 3 pixels from the sorting order 300 according to the second flag received from the encoder 110, and takes the 3 colors as the colors used for reconstructing the pixels of the coding unit block 200. For example, during the operation that the decoding module 128 reconstructs the pixels of the coding unit block 200, since the amount of the colors used for reconstructing the pixels of the coding unit block that is indicated by the second flag is 3, and such amount is greater than 1, the receiving module 122 receives the index values (i.e. 0, 1, 2) corresponding to each pixel of the coding unit block 200, and the decoding module 128 may reconstruct the index map 600 corresponding to the coding unit block 200 according to the index values corresponding to each pixel of the coding unit block 200 that are read from the receiving module 122. Then, the decoding module 128 reconstructs the pixels of the coding unit block 200 according to the index map 600 and the 3 colors (i.e. the color C8, the color C3 and the color C10) corresponding to the aforementioned 3 pixels.

In another exemplary embodiment in the example that the color setting module 114 of the encoder 110 sets the second flag corresponding to the coding unit block 200 to "1", the colors of each pixel of the coding unit block 200 are all represented by a same index value (for example, 0), so that the coding unit 116 is unnecessary to transmit the index values corresponding to the colors of each pixel of the coding unit block 200 to the decoder 120 one by one, and the color setting module 126 of the decoder 120 directly and sequentially selects one color (i.e. the color C8) corresponding to one pixel from the sorting order 300 only according to the second flag received from the encoder 110, and takes the one color as the color used for reconstructing the pixels of the coding unit block 200. Then, the decoding module 128 reconstructs the pixels of the coding unit block 200 by using such one color (i.e. the color C8).

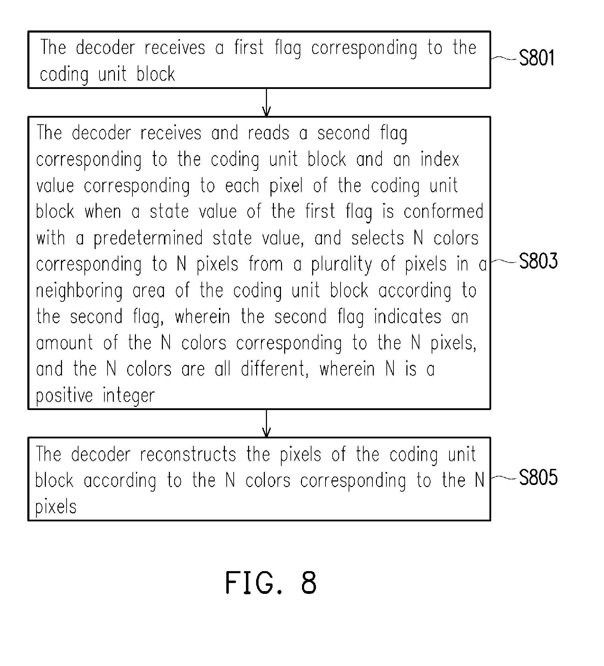

FIG. 8 is a flowchart illustrating a decoding method according to an exemplary embodiment of the disclosure.

Referring to FIG. 8, in step S801, the decoder 120 receives the first flag corresponding to the coding unit block 200.

In step S803, the decoder 120 receives and reads the second flag corresponding to the coding unit block 200 and the index value corresponding to each pixel of the coding unit block 200 when determining that the state value of the first flag is conformed with the predetermined state value, and selects N colors corresponding to N pixels from a plurality of pixels in the neighboring area 210 of the coding unit block 200 according to the second flag, where the second flag indicates an amount of the N colors corresponding to the N pixels, and the N colors are all different, and N is a positive integer.

In step S805, the decoder 120 reconstructs the pixels of the coding unit block 200 according to the N colors corresponding to the N pixels.

Various steps of FIG. 8 have been described in detail above, and details thereof are not repeated. It should be noted that the steps of FIG. 8 can be implemented as a plurality of program codes or circuits, which is not limited by the disclosure. Moreover, the method of FIG. 8 can be used in collaboration with the aforementioned exemplary embodiments, and can be used independently, which is not limited by the disclosure. It should be noted that the decoding method of FIG. 8 can also be referred to as the neighboring block multi-color prediction mode, which is to use one or a plurality of colors of pixels in a neighboring area of the currently encoded coding unit block to reconstruct the pixels of the currently decoded coding unit block. Particularly, in the aforementioned exemplary embodiment, the neighboring block multi-color prediction mode is other coding mode independent to the SCC. For example, the coding mode of the SCC includes a palette mode and an intra block copy mode, etc., and the decoder 120 may enter the coding mode corresponding to the flag according to the flags corresponding to different modes. In other words, when the decoder 120 receives a flag for enabling the palette mode, the decoder 120 executes the decoding operation under the palette mode, and when the decoder 120 receives the first flag for enabling the neighboring block multi-color prediction mode (i.e. the first flag is conformed with the predetermined state value), the decoder 120 executes the decoding operation under the neighboring block multi-color prediction mode. However, the disclosure is not limited thereto. For example, in another exemplary embodiment, the decoder 120 may execute the aforementioned neighboring block multi-color prediction mode under a specific coding mode of the SCC. Namely, the decoder 120 may determine whether to use the neighboring block multi-color prediction mode to execute the decoding operation according to the state value of the first flag under the palette mode.

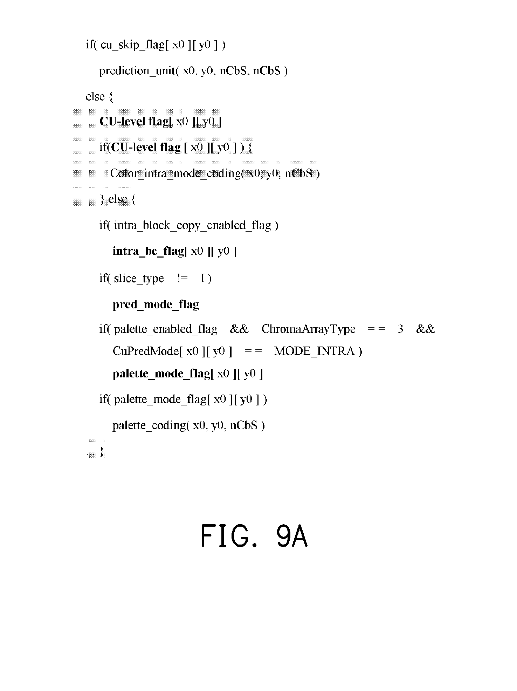

FIG. 9A-FIG. 9C illustrate program codes for decoding according to an exemplary embodiment of the disclosure.

Referring to FIG. 9A, in the decoding operation, the decoder 120 may determine whether to use the neighboring block multi-color prediction mode to implement the decoding according to equations in the program codes shown in FIG. 9A, where a parameter "CU-level flag" corresponds to the aforementioned first flag of the disclosure, which is used for indicating whether the neighboring block multi-color prediction mode is enabled, and parameters "intra_bc_flag", "pred_mode_flag" and "palette_mode_flag" respectively correspond to flags used for enabling the intra block copy mode, the prediction mode and the palette mode. For example, when the value of the parameter "CU-level flag" is set to 1, the decoder 120 may use the neighboring block multi-color prediction mode to decode the image to be currently decoded. Conversely, when the value of the parameter "CU-level flag" is not 1, the decoder 120 executes the operation of the intra block copy mode, the prediction mode or the palette mode according to the parameter "intra_bc_flag", "pred_mode_flag" or "palette_mode_flag". Particularly, in the example of FIG. 9A, the neighboring block multi-color prediction mode is the other coding mode independent to the SCC.

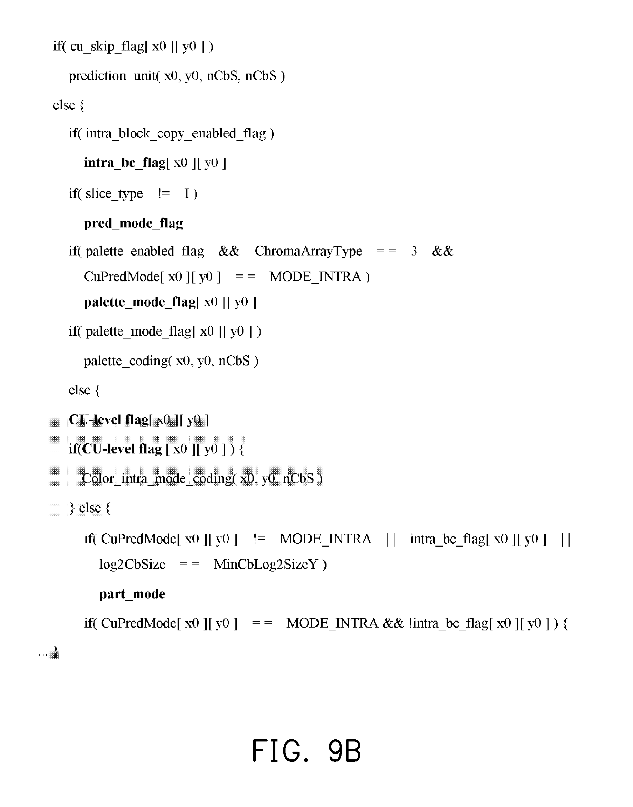

Referring to FIG. 9B, similarly, in the example of FIG. 9B, the neighboring block multi-color prediction mode is also the other coding mode independent to the SCC, for example, the decoder 120 executes one of the intra block copy mode, the prediction mode, the palette mode or the neighboring block multi-color prediction mode according to the parameters "intra_bc_flag", "pred_mode_flag", "palette_mode_flag" and "CU-level flag".

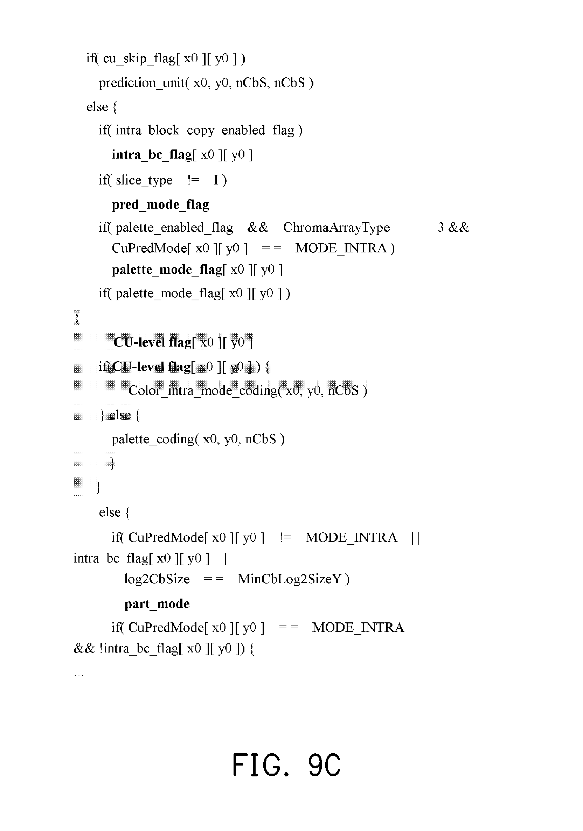

Referring to FIG. 9C, in the present embodiment, the decoder 120 executes the operation of the intra block copy mode, the prediction mode or the palette mode according to the parameter "intra_bc_flag", "pred_mode_flag" or "palette_mode_flag". Particularly, when the decoder 120 uses the palette mode to implement the decoding operation, the decoder 120 may further determine the value of the parameter "CU-level flag" to decide whether to enable the neighboring block multi-color prediction mode. In other words, in the example of FIG. 9C, the decoder 120 executes the neighboring block multi-color prediction mode under the palette mode of the SCC, i.e. the neighboring block multi-color prediction mode of the disclosure can be a coding/decoding mode under any mode of the SCC. According to the above description, it is known that an execution time point of the neighboring block multi-colorprediction mode is not limited by the disclosure, which can be the other coding modeindependent to the SCC, or a special case under any mode of the SCC. Moreover, FIG.9A-FIG. 9C are only exemplary program codes of the disclosure, which are not used for limiting the disclosure.

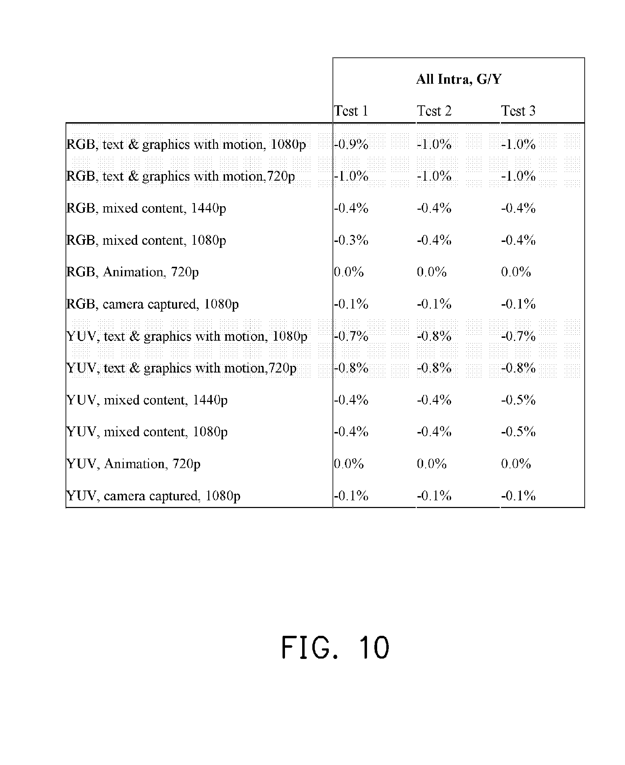

FIG. 10 is a schematic diagram illustrating a test result of coding/encoding according to an exemplary embodiment of the disclosure.

Referring to FIG. 10, in order to evaluate the encoding method and the decoding method provided by the disclosure, under an experiment environment specified by a core experiment of the JCT-VC standard organization, the disclosure is implemented in reference software provided by the above organization, and results of all static coding-lossy (all intra-lossy) compression modes are compared. The tested video formats include a YUV format and a RGB format, and there are totally 26 test video files. The 26 test video files can be divided into 12 categories according to different video content and different formats, and the 12 categories are as that described in a first column located to the left of FIG. 10. In the 12 categories, "text & graphics with motion" is a common video application of the SCC, and the content thereof is generally SCC common applications such as briefing, software presentation, etc., and "mixed content" includes the common video applications of the SCC and a common natural image application of the HEVC, and "animation" is animation video, where the application of the "animation" is less used in the SCC environment. These video categories are further divided into three types of 720p, 1080p and 1440p according to sizes thereof. The presented data are all BDrate, and the BDrate is a conventional objective assessment method for video quality generally used by the JCT-VC standard organization, and when the data is smaller than 0 and the smaller the data is, the better the visual quality of the same bit rate is.

To be specific, the test results shown in FIG. 10 correspond efficiencies that the color setting module 114 executes the plurality of methods for selecting the N colors corresponding to the N pixels from the neighboring area 210, where "Test 1" corresponds a BDrate efficiency of the embodiment of FIG. 3A-FIG. 3B of the disclosure, "Test 2" corresponds a BDrate efficiency of the embodiment of FIG. 4 of the disclosure, and "Test 3" corresponds a BDrate efficiency of the embodiment of FIG. 5 of the disclosure. According to the test results, it is known that compared with the existing standard method, the method provided by the disclosure has a great efficiency improvement under the premise that the complexity is almost not changed, the efficiencies of the three embodiments may respectively have a maximum 0.7-1.0%, 0.8-1.0% and 0.7-1.0% improvement.

In summary, in the coding method and the decoding method and the codec system, the encoder and the decoder using the methods provided by the exemplary embodiments of the disclosure, the set flag is used for indicating the amount and colors of the pixels used for predicting and reconstructing the current coding unit block in the neighboring area, so as to save the amount of transmitted bits and effectively decrease a transmission amount of the coding operation, and accordingly improve the efficiency of the SCC.

## Claims

1. A decoder (120), **characterized in that** the decoder comprising:
a storage circuit (120a), recording a plurality of modules; and
a processor circuit (120b), connected to the storage circuit (120a), and configured to access the storage circuit (120a) and execute a neighboring block multi-color prediction mode through the modules, the modules comprise:
a receiving module (122), receiving a first flag corresponding to a coding unit block (200);
a flag state determination module (124), determining a state value of the first flag corresponding to the coding unit block (200), wherein when the state value of the first flag is conformed with a predetermined state value, the receiving module (122) further receives a second flag corresponding to the coding unit block (200) and an index value corresponding to each pixel of the coding unit block (200);
a color setting module (126), reading the second flag corresponding to the coding unit block (200) and the index value corresponding to each pixel of the coding unit block (200) received by the receiving module (122) when the state value of the first flag is conformed with the predetermined state value, and selecting N colors corresponding to N pixels from a plurality of pixels in a neighboring area of the coding unit block (200) according to the second flag, wherein the second flag indicates an amount of the N colors corresponding to the N pixels, and the N colors are all different, and N is a positive integer; and
a decoding module (128), reconstructing the pixels of the coding unit block (200) according to the N colors corresponding to the N pixels.

2. The decoder (120) as claimed in claim 1, wherein the processor circuit (120b) further executes one of a plurality of specific coding modes according to a plurality of coding flags of the specific coding modes when the state value of the first flag is not conformed with the predetermined state value,
wherein the specific coding modes comprise an intra block copy mode, a prediction mode and a palette mode.

3. The decoder (120) as claimed in claim 1, wherein the processor circuit (120b) further executes one of a plurality of specific coding modes according to a plurality of coding flags of the specific coding modes ,
wherein the processor circuit (120b) further executes the neighboring block multi-color prediction mode through the modules under one of the specific coding modes,
wherein the specific coding modes comprise an intra block copy mode, a prediction mode and a palette mode.

4. The decoder (120) as claimed in claim 1, wherein when the flag state determination module (124) determines that the amount of the N colors corresponding to the N pixels indicated by the second flag is greater than 1, the receiving module (122) receives the index value corresponding to each pixel of the coding unit block (200), and the decoding module (128) reconstructs an index map (600) corresponding to the coding unit block (200) according to the index value corresponding to each pixel of the coding unit block (200), and reconstructs the pixels of the coding unit block (200) according to the N colors corresponding to the N pixels and the index map (600),
wherein when the flag state determination module (124) determines that the amount of the N colors corresponding to the N pixels indicated by the second flag is equal to 1, the receiving module (122) skips receiving the index value corresponding to each pixel of the coding unit block (200), and the decoding module (128) reconstructs the pixels of the coding unit block (200) only according to one color corresponding to one pixel indicated by the second flag.

5. The decoder (120) as claimed in claim 1, wherein the neighboring area comprises pixels neighboring to the coding unit block (200) in at least one other coding unit block neighboring to the coding unit block (200), wherein the at least one other coding unit block comprises a coding unit block (202) neighboring to an upper edge of the coding unit block (200), a coding unit block (204) neighboring to a left edge of the coding unit block (200) and a coding unit block (206) neighboring to an upper left corner of the coding unit block (200).

6. The decoder (120) as claimed in claim 1, wherein the color setting module (126) further clusters the pixels into M clusters according to pixel values of the pixels in the neighboring area, wherein the pixel values of the pixels in a same cluster of the M clusters are the same, and colors of the pixels in different clusters of the M clusters are all different, wherein M is a positive integer,
wherein the color setting module (126) further arranges the M clusters in a descending order according to an amount of pixels in each of the M clusters, so as to obtain a sorting order (300, 330),
wherein the color setting module (126) further sequentially selects N clusters from the M clusters according to the sorting order (300, 330), and sets the N colors corresponding to the N pixels as N colors corresponding to the N clusters wherein each of the N pixels respectively belongs to each of the N clusters.

7. The decoder (120) as claimed in claim 1, wherein the color setting module (126) further clusters the pixels into M clusters according to pixel values of the pixels in the neighboring area, wherein the pixel values of the pixels in a same cluster of the M clusters are the same, and colors of the pixels in different clusters of the M clusters are all different, wherein M is a positive integer,
wherein if M is smaller than a predetermined candidate color amount, the color setting module (126) further selects P colors from a palette color prediction table (40) corresponding to the coding unit block (200) to serve as P clusters, such that (M+P) is equal to the predetermined candidate color amount, wherein each color of the P colors is different,
wherein the color setting module (126) further arranges the M clusters in a descending order according to an amount of pixels in each of the M clusters, and arranges the P clusters behind the M clusters to obtain a sorting order (400),
wherein the color setting module (126) further sequentially selects N clusters from the M clusters and the P clusters according to the sorting order (400), and sets the N colors corresponding to the N pixels as N colors corresponding to the N clusters, wherein each of the N pixels respectively belongs to each of the N clusters.

8. The decoder (120) as claimed in claim 1, wherein the color setting module (126) further clusters the pixels into M clusters according to pixel values of the pixels in the neighboring area, wherein the pixel values of the pixels in a same cluster of the M clusters are the same, and colors of the pixels in different clusters of the M clusters are all different, wherein M is a positive integer,
wherein the color setting module (126) further selects one cluster from the M clusters according to an amount of pixels in each of the M clusters, wherein the amount of the pixels in the one cluster is greater than the amount of the pixels in other cluster of the M clusters,
wherein the color setting module (126) further selects Q colors from the neighboring area to serve as Q clusters according to at least one direction, and arranges the Q clusters behind the one cluster to obtain a sorting order (500),
wherein the color setting module (126) further sequentially selects N clusters from the one cluster and the Q clusters according to the sorting order (500), and sets the N colors corresponding to the N pixels as N colors corresponding to the N clusters, wherein each of the N pixels respectively belongs to each of the N clusters.

9. A decoding method, adapted to a coding unit block (200) having a plurality of pixels, **characterized in that** the decoding method comprising:
(a) receiving (S801) a first flag corresponding to the coding unit block (200);
(b) receiving (S803) and reading a second flag corresponding to the coding unit block (200) and an index value corresponding to each pixel of the coding unit block (200) when a state value of the first flag is conformed with a predetermined state value, and selecting N colors corresponding to N pixels from a plurality of pixels in a neighboring area of the coding unit block (200) according to the second flag, wherein the second flag indicates an amount of the N colors corresponding to the N pixels, and the N colors are all different, wherein N is a positive integer; and
(c) reconstructing (S805) the pixels of the coding unit block (200) according to the N colors corresponding to the N pixels.

10. The decoding method as claimed in claim 9, further comprising:
executing one of a plurality of specific coding modes according to a plurality of coding flags of the specific coding modes when the state value of the first flag is not conformed with the predetermined state value,
wherein the specific coding modes comprise an intra block copy mode, a prediction mode and a palette mode.

11. The decoding method as claimed in claim 9, further comprising:
executing one of a plurality of specific coding modes according to a plurality of coding flags of the specific coding modes ; and
executing the steps (a)-(c) under one of the specific coding modes ,
wherein the specific coding modes comprise an intra block copy mode, a prediction mode and a palette mode.

12. The decoding method as claimed in claim 9, wherein the step of reconstructing the pixels of the coding unit block (200) according to the N colors corresponding to the N pixels comprises:
receiving the index value corresponding to each pixel of the coding unit block (200) when the amount of the N colors corresponding to the N pixels indicated by the second flag is greater than 1, and reconstructing an index map (600) corresponding to the coding unit block (200) according to the index value corresponding to each pixel of the coding unit block (200), and reconstructing the pixels of the coding unit block (200) according to the N colors corresponding to the N pixels and the index map (600); and
skipping the step of receiving the index value corresponding to each pixel of the coding unit block (200) when the amount of the N colors corresponding to the N pixels indicated by the second flag is equal to 1, and reconstructing the pixels of the coding unit block (200) only according to one color corresponding to one pixel indicated by the second flag.

13. The decoding method as claimed in claim 9, wherein the neighboring area comprises pixels neighboring to the coding unit block (200) in at least one other coding unit block neighboring to the coding unit block (200), wherein the at least one other coding unit block comprises a coding unit block (202) neighboring to an upper edge of the coding unit block (200), a coding unit block (204) neighboring to a left edge of the coding unit block (200) and a coding unit block (206) neighboring to an upper left corner of the coding unit block (200).

14. The decoding method as claimed in claim 9, wherein the step of selecting the N colors corresponding to the N pixels from the pixels in the neighboring area of the coding unit block (200) according to the second flag comprises:
clustering the pixels into M clusters according to pixel values of the pixels in the neighboring area, wherein the pixel values of the pixels in a same cluster of the M clusters are the same, and colors of the pixels in different clusters of the M clusters are all different, wherein M is a positive integer;
arranging the M clusters in a descending order according to an amount of pixels in each of the M clusters, so as to obtain a sorting order (300, 330); and
sequentially selecting N clusters from the M clusters according to the sorting order (300, 330), and setting the N colors corresponding to the N pixels as N colors corresponding to the N clusters, wherein each of the N pixels respectively belongs to each of the N clusters.

15. The decoding method as claimed in claim 9, wherein the step of selecting the N colors corresponding to the N pixels from the pixels in the neighboring area of the coding unit block (200) according to the second flag comprises:
clustering the pixels into M clusters according to pixel values of the pixels in the neighboring area, wherein the pixel values of the pixels in a same cluster of the M clusters are the same, and colors of the pixels in different clusters of the M clusters are all different, wherein M is a positive integer;
selecting P colors from a palette color prediction table (40) corresponding to the coding unit block (200) to serve as P clusters if M is smaller than a predetermined candidate color amount, such that (M+P) is equal to the predetermined candidate color amount, wherein each color of the P colors is different;
arranging the M clusters in a descending order according to an amount of pixels in each of the M clusters, and arranging the P clusters behind the M clusters to obtain a sorting order (400); and
sequentially selecting N clusters from the M clusters and the P clusters according to the sorting order (400), and setting the N colors corresponding to the N pixels as N colors corresponding to the N clusters, wherein each of the N pixels respectively belongs to each of the N clusters.

16. The decoding method as claimed in claim 9, wherein the step of selecting the N colors corresponding to the N pixels from the pixels in the neighboring area of the coding unit block (200) according to the second flag comprises:
clustering the pixels into M clusters according to pixel values of the pixels in the neighboring area, wherein the pixel values of the pixels in a same cluster of the M clusters are the same, and colors of the pixels in different clusters of the M clusters are all different, wherein M is a positive integer;
selecting one cluster from the M clusters according to an amount of pixels in each of the M clusters, wherein the amount of the pixels in the one cluster is greater than the amount of the pixels in other cluster of the M clusters;
selecting Q colors from the neighboring area to serve as Q clusters according to at least one direction, and arranging the Q clusters behind the one cluster to obtain a sorting order (500); and
sequentially selecting N clusters from the one cluster and the Q clusters according to the sorting order (500), and setting the N colors corresponding to the N pixels as N colors corresponding to the N clusters, wherein each of the N pixels respectively belongs to each of the N clusters.

17. A codec system (100), adapted to execute a neighboring block multi-color prediction mode suitable for image and video compression, **characterized in that** the codec system (100) comprising:
an encoder (110), setting a state value of a first flag corresponding to a coding unit block (200); and
a decoder (120),
wherein the encoder (110) further selects N colors corresponding to N pixels from a plurality of pixels in a neighboring area of the coding unit block (200) when the state value of the first flag is conformed with a predetermined state value, and sets a second flag corresponding to the coding unit block (200) to an amount of the N colors corresponding to the N pixels, wherein the N colors are all different, and N is a positive integer,
wherein the encoder (110) further indexes each pixel in the coding unit block (200) such that a color of each pixel in the coding unit block (200) is represented by index values of the N pixels,
wherein the encoder (110) further transmits the first flag corresponding to the coding unit block (200) to the decoder (120), and when the state value of the first flag is conformed with the predetermined state value, the encoder (110) transmits the second flag corresponding to the coding unit block (200) and an index value corresponding to each pixel of the coding unit block (200) to the decoder (120).

18. The codec system (100) as claimed in claim 17, wherein the decoder (120) receives the first flag corresponding to the coding unit block (200), and determines the state value of the first flag corresponding to the coding unit block (200),
wherein the decoder (120) further receives and reads the second flag corresponding to the coding unit block (200) and the index value corresponding to each pixel of the coding unit block (200) when the state value of the first flag is conformed with a predetermined state value, and selects N colors corresponding to N pixels from a plurality of pixels in the neighboring area of the coding unit block (200) according to the second flag, wherein the second flag indicates an amount of the N colors corresponding to the N pixels, and the N colors are all different, wherein N is a positive integer; and
wherein the decoder (120) further reconstructs the pixels of the coding unit block (200) according to the N colors corresponding to the N pixels.

19. The codec system (100) as claimed in claim 18, wherein the codec system (100) further executes one of a plurality of specific coding modes according to a plurality of coding flags of the specific coding modes when the state value of the first flag is not conformed with the predetermined state value,
wherein the specific coding modes comprise an intra block copy mode, a prediction mode and a palette mode.

20. The codec system (100) as claimed in claim 18, wherein the codec system (100) executes one of a plurality of specific coding modes according to a plurality of coding flags of the specific coding modes ,
wherein the codec system (100) further executes the neighboring block multi-color prediction mode under one of the specific coding modes
wherein the specific coding modes comprise an intra block copy mode, a prediction mode and a palette mode.

21. The codec system (100) as claimed in claim 17, wherein when the amount of the N colors corresponding to the N pixels is greater than 1, the encoder (110) generates an index map (600) according to the index value corresponding to a color of each pixel of the coding unit block (200), and transmits the index value corresponding to each pixel of the coding unit block (200) to the decoder (120), wherein the color of each pixel of the coding unit block (200) in the index map (600) is presented by the index values corresponding to the N pixels,
wherein when the amount of the N colors corresponding to the N pixels is equal to 1, the encoder (110) does not transmit the index value corresponding to the color of each pixel of the coding unit block (200) to the decoder (120).

22. The codec system (100) as claimed in claim 18, wherein when the decoder (120) determines that the amount of the N colors corresponding to the N pixels indicated by the second flag is greater than 1, the decoder (120) further receives the index value corresponding to each pixel of the coding unit block (200), and reconstructs an index map (600) corresponding to the coding unit block (200) according to the index value corresponding to each pixel of the coding unit block (200), and reconstructs the pixels of the coding unit block (200) according to the N colors corresponding to the N pixels and the index map (600),
wherein when the decoder (120) determines that the amount of the N colors corresponding to the N pixels indicated by the second flag is equal to 1, the decoder (120) skips receiving the index value corresponding to each pixel of the coding unit block (200), and reconstructs the pixels of the coding unit block (200) only according to one color corresponding to one pixel indicated by the second flag.
